# EUROPEAN PATENT APPLICATION

(11) **EP 3 151 133 A1**
(43) Date of publication of application: **05.04.2017**
(21) Application number: 15306540.4
(22) Date of filing: 30.09.2015
(51) Int. Cl.: G06F 17/30

(54) **MEDIA PRODUCTION SYSTEM, LOCAL MODULE, MAIN MODULE AND METHODS FOR HANDLING METADATA**

(71) Applicant: Thomson Licensing, 92130 Issy-les-Moulineaux (FR)
(72) Inventor: Glaeser, Frank, 30449 Hannover (DE); Weber, Michael, 30559 Hannover (DE); Pieper, Michael, 30659 Hannover (DE); Li, Hui, 30539 Hannover (DE); Kubsch, Stefan, 31559 Hohnhorst (DE)

(57) **Abstract**

For widening the availability of locally stored heterogeneous metadata in a geographically distributed media production system, the invention proposes to add a file system based layer **(102, 104, 106, 107)** that collects access information of the metadata stored in different Repositories **(101, 103, 105),** and provides the access information of selected metadata in order to make the selected metadata accessible. Advantageously, the Local Repositories **(101, 103, 105)** and local data formats can remain unchanged.

## Description

### Field of the invention

The present invention relates to digital audiovisual media production, for example to globally networked distributed AV media production chains.

### Background of the invention

In media production companies having globally distributed sites that work together on joint media production projects, repeated and voluminous exchange of intermediate results is necessary. In today's production chains the data being passed from one to the next production step is centered mostly on the real media content also known as substance, i.e. on the video or audio files themselves. Because of that approach, many metadata created locally for internal use will be lost when the processed media content is forwarded to the next site.

For example, on a movie production set a lot of information are available or could be processed in form of metadata, like technical parameters of the used camera or of other used equipment, descriptions about the scene setup, semantic content information in the storyboard and script, etc.

But only the produced dailies and the recorded movie scenes will reach the next steps in the production chain. This repeats in the following steps, like colour grading, editing, cutting, or visual effects.

But, many of the lost metadata would often be very helpful for subsequent production steps. For example, semantic information from the script on the set would be very helpful when searching specific scenes in following production steps. Some kind of semantic information could even be delivered to the end consumer, together with the final movie in a form of semantic descriptions of individual movie scenes.

Another example of lost metadata is that traditionally, only the final colour grading will be stored and delivered. However, during the colour grading process a lot of other metadata and alternative colour gradings are being generated, some with big effort, but in the existing workflow they all will be deleted at the end of the processing step.

US 2012/0173556 A1 says it discloses a method and system for managing semantic and syntactic metadata. Heterogeneous data is received. After the heterogeneous data is received, the semantic metadata associated with the received heterogeneous data is captured and syntactic metadata associated with the received heterogeneous data is captured. The received heterogeneous data and said captured semantic metadata and said syntactic metadata are logically linked. The heterogeneous data is stored in a repository.

### Invention

The invention starts with recognizing that one reason for the described drawbacks is that in today's production environment, each site uses highly specialized repositories with databases, data models and data formats that are tailored to the local requirements of the individual process and to the used tools. Many locally generated or edited metadata might perhaps be interesting for other locations, but the other locations cannot access them, because the specialized repository holding them can only be accessed locally via specialized interfaces.

Existing content management system providers offer only systems with their own internal storage infrastructure or they cover only a minor part of the data that are generated during an entire content production chain. Also, their systems are typically not easily extensible regarding new types and formats of metadata.

For a distributed media production system where all sites have Local Repositories optimized to local requirements and tools, the invention proposes the following architecture:

Existing Local Repositories will be extended by one associated Local Module each. On one hand, each of these Local Modules is aware of the distinct local data format or formats that are in use in its associated Local Repository. Hence, the Local Module can access the data on its associated Local Repository in a cognizant way. On the other hand, each Local Module also comprises its own Local Storage for which it provides content-agnostic file storage functionality. The file storage functionality of all Local Modules is compatible, any state-of-the-art file system will do.

The Local Modules are connected to a single Main Module, for example in a way that allows an exchange of messages.

The Local Modules inform the Main Module about all changes in their Local Storage, for example by using a messaging system.

The Main Module collects all information about what is stored in which Local Storage, under a content-agnostic file system perspective.

Via the Main Module, a user application module can receive file system information of all files stored in any of the connected Local Storage. Depending on the kind of file system used, the file system information may for example comprise start address and length information. It may also comprise file fragment information, if the used file system supports file fragmentation. The file system information can be seen as constituting a link or pointer or reference or handle to the source file in the Local Module. With the file system information, the user application module can access the content directly at the location where the information is stored.

Advantageously, all data exchange between any of the Local Modules and the user application module is based on unstructured data in the form of files. With other words, the data exchange layer is agnostic to the inner structure or meaning of the content of the files. This will be denoted as "content-agnostic" in the following.

On the other hand, a user application module that is aware of the local data format of at least one kind of data stored in one of the Local Storages, as soon as it receives the file system information of one such data, can access the content of that file in a cognizant way.

With other words, the general gist of the invention is a file system based added layer that collects access information for heterogeneous data stored in different types of repositories, and provides the access information of selected data in order to make the selected data accessible in a distributed media production chain.

### Drawings

Exemplary embodiments of the invention are illustrated in the drawings and are explained in more detail in the following description.

In the figures:

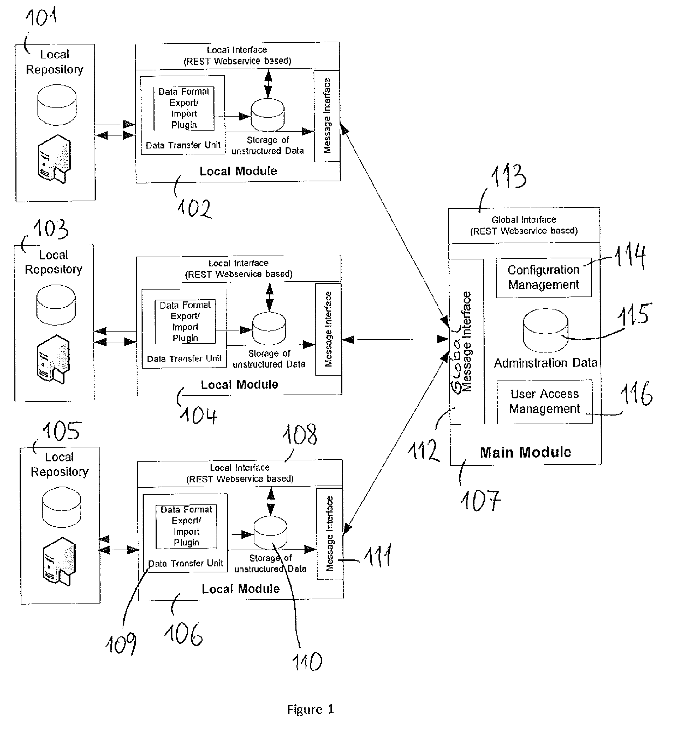

- Fig. 1: illustrates metadata handling components of an example distributed media production system according to the invention.

### Exemplary embodiments

Fig. 1 illustrates, in a symbolic way, metadata handling components of an example distributed media production system according to the invention.

The media production system comprises a first Local Repository **101,** a second Local Repository **103,** and a third Local Repository **105;** a first Local Module **102,** a second Local Module **104,** and a third Local Module **106;** and a Main Module **107.** The media production system may comprise other modules, not shown. The first Local Repository **101** is connected and associated to the first Local Module **102,** the second Local Repository **103** is connected and associated to the second Local Module **104,** and the third Local Repository **105** is connected and associated to the third Local Module **106.**

For illustration purposes but without loss of generality, the first Local Repository **101** and the first Local Module **102** can be assumed to be located at a first production step site, the second Local Repository **103** and the second Local Module **104** can be assumed to be located at a second production step site far away from the first production step site, and the third Local Repository **105** and the third Local Module **106** can be assumed to be located at a third production step site, again far away.

Also without loss of generality, it can be assumed that data stored in the first Local Repository **101** obey a first data format, data stored in the second Local Repository **103** obey a second data format different from the first data format, and data stored in the third Local Repository **105** obey a third data format. In this context, each of the data formats may comprise at least one of a distinct syntax information about a number, a length, a sequence and a hierarchical organization of data fields, and a distinct semantic information about a meaning of the data fields.

With other words, the Local Repositories **101, 103, 105** are the highly specialized local repositories in the different sites of the media production company. Among themselves, they can have completely divergent internal structures regarding the used internal hardware, databases, file systems, data formats and interfaces.

The general idea of the invention is to amend such a set of highly specialized Local Repositories by a repository abstraction layer. The repository abstraction layer is realized by the Local Modules at large, together with the Main Module. The repository abstraction layer is able to store content and metadata of the connected Local Repositories in an unstructured form, i.e. in files stored in the Local Storage of the Local Modules. The repository abstraction layer connects the information stored in the various Local Modules by means of the Main Module which includes the information which data is stored where. The Main Module provides an interface for file system based access to all content and metadata that may be stored anywhere in the connected Local Repositories.

The third Local Module **106** is shown as comprising a Data Transfer Unit **109,** a Storage of unstructured Data **110,** a Message Interface **111,** and a Local Interface **108.** The other Local Modules **102, 104** comprise corresponding units, shown but not individually referenced in **Fig. 1****.**

The Data Transfer Unit **109** is equipped and configured for export and import of the metadata from/to the loal data format internally used in the connected Local Repository **105.** The Storage of unstructured Data **110** is equipped and configured to provide content-agnostic file storage functionality. The Message Interface **111** is equipped and configured to provide communication to the Main Module **107,** including messages that inform the Main Module **107** about data changes in the Local Module **106.** As such, the Message Interface 111 is an embodiment of a more general Local Module Interface. The Local Interface **108** can for instance be REST web service based as described in **"**Representational State Transfer", www.wikipedia.org, retrieved Mar 25, 2015**;** and may be equipped and configured to provide file system level access to the files stored on the Storage of unstructured Data **110.**

The Main Module **107** comprises a Global Message Interface **112,** an Administration Data Storage **115,** a Configuration Management Module **114,** a User Access Management Module **116,** and a Global Interface **113.** The Global Interface **113** can for instance be REST web service based.

The Global Message Interface **112** implements communication with the various connected Local Modules **102, 104, 106.** As such, the Global Message Interface **112** is an embodiment of a more general Main Module Interface. The Administration Data Storage **115** has the same data structure, in the sense of data model of the used data base, that is used for administration of the data that are stored in the Local Modules **102, 104, 106;** namely the data model of Storage for unstructured Data. The administration Data Storage **115** does itself not contain any of the data that are stored in the Local Modules **102, 104, 106;** but it may collect and contain copies of the content-agnostic file system information that the connected Local Modules **102, 104, 106** have and use for administration of the unstructured data they keep on their associated Storage of unstructured Data **110.** The Configuration Management Module **114** is a database with configuration respectively administration information about all connected Local Modules **102, 104, 106.** It may include e.g. also information about the current statuses of the Local Modules **102, 104, 106.** The User Access Management Module **116** may implement a multilevel access rights system via the global interface **113.** So, every Local Repository **101, 103, 105** or Local Module **102, 104, 106** can define access rights for its data that it provides for global access. The Global Interface **113** is REST web service based. It constitutes a search interface for access to all data that are stored in the different connected Local Modules **102, 104, 106.** It accesses the Adminstration Data Storage **115** to provide links to the Local Interface **108** of that Local Module **106** which includes the searched data.

The Main Module **107** has the task to store the information which content and metadata are stored where in the connected Local Modules. For that, it includes an Administration Data Storage **115,** which consists of the data base with a data model that is also used in the Local Modules. That means the Main Module **107** includes no audiovisual data or metadata files themselves - only the information which files are stored where in the connected Local Modules **102, 104, 106.**

The Local Interface **108** of the Local Modules **102, 104, 106** has the same structure as the Global Interface **113** of the Main Module **107.** Together, they provide a uniform access to the unstructured data in the Local Modules **102, 104, 106.**

A Local Module may be available in two different versions, namely active or passive.

In case of a passive Local Module, it is the associated Local Repository which initiates to store into the Local Module that information which is desired to be made globally available. With other words: With a passive Local Module, the associated Local Repository **105** will push the desired information via the Data Transfer Unit **109** of the Local Module **105** into the Storage of unstructured data **110** of the Local Module **106.**

Conversely, an active Local Module, having information about the internal data Format of the associated Local Repository, actively gets, collects and stores the metadata and content from the Local Repository. It may do this for instance at regular time intervals. This can be seen as pulling the desired information from the Local Repository **105.**

For a flexible and maybe even reconfigurable use of the Local Modules with different Local Repository types, the information about the internal data format of the connected Local Repository and for import and export of the metadata models could be loaded specifically, based on a plug-in mechanism. Such dedicated plugins could be loaded during a setup and connection process.

In a media production system according to the invention, all applications along the distributed media production chain that are interested to use metadata from other sites have access to an Application Programming Interface of the Main Module. Based on this API, they can implement searching for these metadata. As a search result, they will get a link to that Local Module where the data are stored.

### Advantages

This invention provides a method and system for media production that connects all the produced metadata independently of the locally used storage type, repository type or data model, and makes them available on all other sites in the production chain.

The invention provides a connected repository for content and all types of metadata that satisfies the requirements of a globally networked distributed media production and distribution environment. All generated metadata can be stored, retained and used at any site in the media production and distribution chain.

Advantageously, local entities can keep their highly specialised Local Repository infrastructure. The possibility to export internally generated or edited metadata from the internal structure of the used storage to an unstructured file based form, makes the metadata accessible to all other sites in a uniform way. No later useful and reusable information will be lost.

As an example of this, semantic information about the scenes of a movie, as contained in the script on the set, can be used for generation of semantic description for movie search engines. This may help to obviate or simplify semantic content analysis.

## Claims

1. A distributed media production **system** comprising
- at least two Local Repositories **(101, 103, 105)** configured to contain as a content audiovisual data and metadata in different local data formats,
- Local Modules **(102, 104, 106)** each communicatively connected to one associated Local Repository **(101, 103, 105)** and having access to information about the local data format of the associated Local Repository **(105),** each Local Module comprising a Local Storage **(110),** being configured to provide content-agnostic file storage functionality of at least part of the content from the associated Local Repository **(105)** into the Local Storage **(110),** being configured to provide **(111)** a file storage information about the content in the Local Storage **(110),** and being configured to provide **(108)** file access to the content in the Local Storage **(110);** and
- a Main Module **(107)** communicatively connected to the Local Modules **(102, 104, 106),** which is configured to receive from the Local Modules **(102, 104, 106)** the file storage information, to receive data requests from a User Application Module, and to fulfill the data requests by providing the User Application Module with the file storage information of the requested data.

2. In a distributed media production system, a **Local Module (106)** comprising a Data Transfer Unit **(109)** for communicatively connecting the Local Module **(106)** to an associated Local Repository **(105)** containing audiovisual data and metadata as a content in a local data format, the Local Module **(106)**
- being configured to have access to information about the local data format of the associated Local Repository **(105),**
- comprising a Local Storage **(110),** a Local Module Interface **(111)** for communicatively connecting the Local Module **(106)** to a Main Module **(107)** and a Local Interface **(108)** for communicatively connecting the Local Module **(106)** to a User Application Module,
- being configured to provide content-agnostic file storage functionality of at least parts of the content from the associated Local Repository **(105)** into the Local Storage **(110),**
- being configured to provide a file storage information about the content in the Local Storage **(110)** to the Local Module Interface **(111),**
- being configured to provide, via the Local Interface **(108),** file access to the content in the Local Storage **(110).**

3. In a distributed media production system, a **Main Module (107)**
- having a Main Module Interface **(112)** for communicatively connecting the Main Module **(107)** to two or more Local Modules **(102, 104, 106),**
- having a Global Interface **(113),**
- being configured to receive on the Main Module Interface **(112)** a file storage information about a content comprising metadata that is available from the Local Modules **(102, 104, 106),**
- being configured to receive data requests on the Global Interface **(113),** and
- being configured to fulfill the data requests by providing, at the Global Interface **(113),** the file storage information of the requested data.

4. The media production system according to Claim 1, the Local Module **(106)** according to Claim 2, or the Main Module **(107)** according to Claim 3, wherein the Local Module Interface **(111)** or the Main Module Interface **(112)** is message based.

5. The media production system according to Claim 1, the Local Module **(106)** according to Claim 2, or the Main Module **(107)** according to Claim 3, wherein the content from the Local Repository **(105)** being stored into the Local Storage **(110)** and the content in the Local Storage **(110)** about which the file storage information is being provided comprises only the metadata.

6. The Local Module **(106)** according to Claim 2, or the Main Module **(107)** according to Claim 3, wherein the Local Interface **(108)** or the Global Interface **(113)** are REST Web Service based.

7. In a Local Module **(106)** of a distributed media production system, a **method** for handling metadata, comprising:
- providing content-agnostic file storage functionality of the metadata in at least parts of a content in a Local Repository **(105)** communicatively connected to the Local Module (**106**) to a Local Storage **(110)** of the Local Module **(106);**
- providing a file storage information about the metadata in the Local Storage **(110)** to a Local Module Interface (111), and
- providing, via a Local Interface **(108)** of the Local Module **(106),** file access to the metadata in the Local Storage **(110).**

8. In a Main Module **(107)** of a distributed media production system, a **method** for handling metadata, comprising:
- receiving, on a Main Module Interface **(112)** of the Main Module **(107),** a file storage information about metadata that are available from Local Modules **(102, 104, 106)** communicatively connected to the Main Module **(107),**
- receiving, on a Global Interface **(113)** of the Main Module **(107),** metadata requests, and
- fulfilling the data requests by providing, at the Global Interface **(113),** the file storage information of the requested metadata.
